# EUROPEAN PATENT APPLICATION

(11) **EP 4 749 336 A1**
(43) Date of publication of application: **27.05.2026**
(21) Application number: 25218348.8
(22) Date of filing: 25.11.2025
(51) Int. Cl.: G02B 5/128

(54) **RETROREFLECTIVE SHEET COMPRISING EMBEDDED MICROSPHERES**

(30) Priority: 26.11.2024 WO PCT/EP2024/083555
(71) Applicant: Orafol Europe GmbH, 16515 Oranienburg (DE)
(72) Inventor: BOEHM, Anna Katharina, 16515 Oranienburg (DE); BERGER, Daniel, 13505 Berlin (DE); LOCLAIR,, Holger, 16515 Oranienburg (DE)
(74) Representative: Hoffmann Eitle

(57) **Abstract**

This disclosure relates to a retroreflective sheet comprising, in order, a top film layer, a binder layer, a spacer layer, and a metal-based reflective layer. The retroreflective sheet comprises a plurality of microspheres which are partially embedded in the spacer layer, penetrate the binder layer, and reach into the top film layer. The binder layer is provided with a white colorant.

## Description

### Technical Field

The present disclosure relates to a retroreflective sheet comprising embedded microspheres. The disclosure also relates to a method of manufacturing a retroreflective sheet comprising embedded microspheres.

### Technical Background

Various types of retroreflective sheets are known and are used for a variety of purposes, for example, for road signs, license plates, or as stickers or emblems for vehicles or personal articles, etc.

A retroreflective sheet reflects incoming light back, substantively in the direction of the source. In other words, the direction of a light ray meeting a retroreflector is to a large degree substantively parallel to the light ray that is sent back to the light source.

Known retroreflective sheets include microprismatic retroreflective sheets, encapsulated glass bead retroreflective sheets, and embedded glass bead retroreflective sheets.

Microprismatic retroreflective sheets provide a high degree of retroreflectivity, especially at narrow angles. In contrast, microprismatic sheets provide lower and angle sensitive retroreflective performance, especially concerning wide angles and rotation of the reflective sheet in the axis between light source and reflector.

Because of their highly symmetric reflective elements, the retroreflective performance of glass bead reflective sheets depends less on the light source-reflector geometry. Nevertheless, glass bead reflective sheets are well-known for their homogeneous optical appearance.

Usually, retroreflective sheets comprise a mirror surface as part of the reflector to direct incoming light back to its source. This mirror surface is usually made from thin layers of metal. Microprismatic retroreflective sheets can be made without using any metallic layer and feature reflectors that operate with total internal reflection on the facets of their optical elements. This is achieved by facets of the microprism adjacent to air, whereby those materials are called "air backed" retroreflecting sheets.

The absence of any metal layer results in a higher relative luminance of the retroreflective sheet in daylight as compared to retroreflecting sheets containing a metal layer. Moreover, this results in a brighter optical appearance.

Consequently, microprismatic retroreflective sheets may work well in low-light conditions. They are also durable due to their resistance against environmental factors such as UV radiation and abrasion. In addition, microprismatic retroreflectors are known for their ability to maintain vibrant color reflections over time, and they can be flexibly designed. However, this product construction has limited resistance to mechanical impacts due to the air pockets, which are required for this type of optical elements. These air pockets might be easily damaged or deformed by mechanical impacts, such as scratches or strokes.

However, the manufacturing of microprismatic retroreflective sheets is quite complex and, hence, time consuming, and also not cheap.

Glass bead retroreflective sheets are a more cost-efficient alternative. The production process is simpler, allowing for faster manufacturing.

Encapsulated glass bead retroreflective sheets include glass beads that are metallized on one side, in order to enhance their reflective properties, and that are included in air pockets. Between the areas filled with air, sealing areas are provided. These sealing areas decrease the overall share of a surface available to actively contribute to reflective properties. Moreover, such encapsulated glass bead sheetings are relatively thick and mechanically sensitive. They may suffer or even be damaged upon being deformed and are, hence, not ideal for three dimensional applications.

To produce the metallized glass beads, the glass beads must be partially embedded in a removable carrier. The latter is then metallized, and the metallized surface is coated with a support layer. The removable carrier sheet is peeled off, and the non-metallized exposed surfaces of the glass beads must then be protected from the impact of dirt and humidity by various further coating and/or sealing steps. Such coating and/or sealing steps generally involve the use of solvents and other pollutants. In addition, these steps tend to increase the manufacturing costs.

Embedded glass bead retroreflective sheets comprise glass beads that may be coated with a plastic material, wherein the plastic material is metallized to form a reflective layer. Also in these cases, various further coating steps are needed during manufacturing, which generally involve the use of solvents and other pollutants. Thus, also the embedded glass bead sheeting manufacturing processes raise concerns in terms of unsatisfactory environment-friendliness.

There is, hence, a need for a retroreflective sheet and a corresponding manufacturing method suited to address at least one and preferably all of the above-mentioned shortcomings.

### Summary

Aspects of the above-mentioned object are achieved by a retroreflective sheet in accordance with the present disclosure.

A retroreflective sheet in accordance with the present disclosure may comprise, in order, a top film layer, a binder layer, a spacer layer, and a metal-based reflective layer. The retroreflective sheet may comprise further layers. These may be positioned in-between any of the mentioned layers or on one side or the other side, or a mix of all of these options. For example, a primer may be inserted between any of two adjacent layers (this means that there may be one or several additional primer layers). However, there may be no further layers present, and, in particular, there may be no further layers present between the top film layer, the binder layer, the spacer layer, and the metal-based reflective layer, so that these four layers are adjacent to one another in the mentioned order. The top film layer may or may not be printed on.

The top film layer may be the uppermost layer of the retroreflective sheet, that is, there may be no further layer above the top film layer. The top film layer may be a coating layer, i.e., a layer that is provided in the form of a coating. The top film layer may be an extruded film. The top film layer may be a calendared film. However, the disclosure is not limited thereto.

Light falling onto the retroreflective sheet may thus pass the top film layer, the binder layer, and the spacer layer, and then experience reflection at the metal-based reflective layer.

The retroreflective sheet may comprise a plurality of microspheres which are partially embedded in the spacer layer, penetrate the binder layer, and reach into the top film layer. In other words, the microspheres may in particular be in contact with the three mentioned layers (and penetrate the binder layer and be in contact with the other two layers).

The binder layer may be provided with a white colorant.

The white colorant may, exclusively or in addition to another form of white colorant, be provided in the form of white pigments. Alternatively, or additionally, the white colorant may comprise a white colored dye. The white colorant may comprise at least one type of pigments and/or at least one type of dye.

The white pigments may comprise titanium dioxide and/or solvable pigments.

The white colorant may comprise a lacquer.

As the microspheres are both surrounded in part by the top film layer as well as the binder layer, the influence of colors from both the top film layer as well as the binder layer may influence the color appearance of retroreflected light. This may allow promoting a higher relative luminance combined with the possibility of influencing the color appearance as compared to known assemblies. The top film layer may not be colored or may be colored. Thus, a superposition of a color effect from the binder layer with another color effect or a colorless effect from the top film layer may provide an overall appearance of retroreflected light.

The appearance may also depend on the lighting conditions, so that the relative weight of the color effect from the binder layer with respect to the relative weight of the color effect or colorless effect from the top film layer may depend on the lighting conditions. In particular, the color appearance of the retroreflective light may be different during daytime conditions in comparison to nighttime conditions.

The construction of a retroreflective sheet with microspheres may, however, be particularly robust and technically simple in manufacturing, while nevertheless allowing for a high relative luminance, which may otherwise not be attainable with a retroreflective sheet with microspheres.

The binder layer may be provided with an additional colorant. In other words, the binder layer may be provided with more than one colorant. This may add to the possibilities regarding color effects.

The additional colorant may, exclusively or in addition to another form of colorant, be provided in the form of (colored, and/or opaque) pigments. The additional colored pigments may be other colored pigments than white color pigments. The additional colored pigments may comprise titanium dioxide and/or solvable pigments. Alternatively, or additionally (to pigments), the additional colorant may comprise a colored dye. The additional colorant may comprise at least one type of additional pigments and/or at least one additional type of dye. At least one additional dye may be a dye other than a white dye or pigment.

The top film layer may be provided with a further colorant. The term "further" is just a label to distinguish the colorant associated with the top film layer from a colorant associated with the binder layer. The colorant associated with the top film layer may allow to provide a further overall color effect. That is, the effect may be on top of the effect associated with one or several colorants associated with the binder layer. In particular, the relative balance between the influence of a colorant in the top film layer and a colorant in the binder layer may change depending on the lighting condition and, in particular, for example, depending on daytime or nighttime lighting conditions.

The further colorant may comprise (or, optionally, consist of) further colored pigments (e.g., colored pigments other than white pigments). The further colored pigments may comprise titanium dioxide and/or solvable pigments. Alternatively or additionally, the further colorant may comprise (or, optionally, consist of) at least one further colored dye.

The metal-based reflective layer may be provided as a metallization on a side of the adhesive layer facing the spacer layer. The metallization may lie between the spacer layer and the adhesive layer.

The retroreflective sheet may comprise an adhesive layer.

The retroreflective sheet may comprise a liner. The liner may be provided adjacent to the adhesive layer. The adhesive layer may, e.g., be provided between the liner and the metallization.

As discussed above, the penetration of the microspheres entirely through the binder layer and the partial penetration into the top film layer may in particular provide many options for color effects, as both the binder layer as well as the top film layer may influence the color appearance as well as the change of appearance depending on different lighting conditions.

To emphasize this effect, it may be beneficial for the microspheres to sufficiently, but not excessively penetrate into the top film layer.

A penetration depth of microspheres of the plurality of the microspheres (optionally: of the microspheres) into the top film layer may be in a range of from 10 to 50 % of a diameter of the microspheres.

A penetration depth of microspheres of the plurality of the microspheres (optionally: of the microspheres) into the top film layer may be in a range of from 15 to 50 %, or, optionally, from 20 to 50%, or 25% to 48%, or from 25% to 47%, or from 25% to 42%, or from 30% to 40%, of a diameter of the microspheres.

A diameter of a microsphere of the plurality of microspheres may be in a range of from 10 µm to 100 µm, or from 15 µm to 80 µm, or from 20 µm to 60 µm, or from 25 µm to 50 µm, or from 27 µm to 43 µm, or from 30 µm to 40 µm.

A penetration depth of microspheres of the plurality of the microspheres (optionally: of the microspheres) into the top film layer may be in a range of from 3 µm to 50 µm, or from 5 µm to 40 µm, or from 6 µm to 30 µm, or from 7 µm to 25 µm, or from 8 µm to 20 µm, or from 8 µm to 18 µm.

At least one of, optionally two of or all of, the top film layer, binder layer, and spacer layer may be a polymer-based layer.

The top film layer may comprise or consist of transparent plastic material. The top film layer may comprise or consist of polyvinyl chloride (PVC) and/or polyurethane (PU).

The binder layer may comprise or consist of (optionally: pigmented) aromatic or aliphatic polyester polyurethane and/or polyvinyl chloride (PVC) and/or polyurethane (PU).

The microspheres may comprise or consist of glass beads. The glass beads may be coated glass beads. The glass beads may be uncoated glass beads. According to some embodiments, the glass beads may comprise coated glass beads as well as uncoated glass beads.

The spacer layer may comprise at least one component selected from the group consisting of: polyvinyl butyral, urea resin, optionally comprising additives, such as a softener, a plasticizer, a flow additive, and/or a bonding agent, optionally a co-polyester.

The metal-based layer may comprise aluminum. When the metal based layer is provided as a metallization on the adhesive layer, it may be a an aluminum metallization.

The adhesive layer may comprise or consist of a polyacrylate.

The liner may comprise at least one component selected from the group consisting of: cover material comprising siliconized paper, PET, and PP.

The binder layer may comprise white pigments with a pigment content in a range of from 0.1 to 10 wt%.

The binder layer may comprise or consist of a binder lacquer layer.

The spacer layer may comprise or consist of a spacer lacquer layer.

The top film layer may comprise a crosslinker with a concentration in a range of from 5wt% to 12wt%. This range may allow to control a penetration depth of the microspheres into the top film layer to be within a desirable range.

The present disclosure also relates to a method of manufacturing a retroreflective sheet in accordance with any one or several of the features of retroreflective sheets described above.

The method may comprise a step of heating a pre-cursor top film layer to a temperature of at least a glass transition temperature of the material of which the pre-cursor binder layer is made of, to reach a heated state of the pre-cursor top film layer, and a step of embedding the microspheres in a pre-cursor spacer layer and a pre-cursor binder layer, and of letting the microspheres sink into the pre-cursor top film layer in the heated state.

Additional advantages and features of the present disclosure, that can be realized on their own or in combination with one or several features discussed above, insofar as the features do not contradict each other, will become apparent from the following description of particular embodiments.

### Brief Description of the Drawings

For a better understanding of the present disclosure and to show how the same may be carried into effect, reference will now be made, by way of example only, to the accompanying drawings, in which:
The description is given with reference to the accompanying drawings, in which:

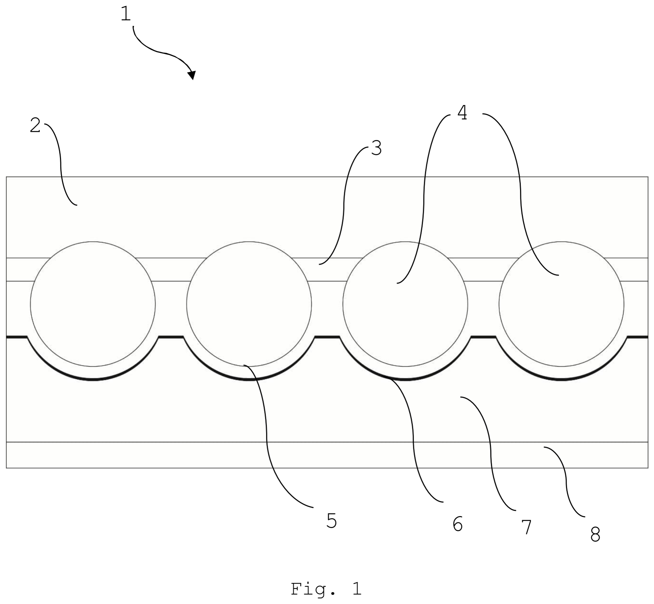

- Fig. 1: is a cross-sectional of a retroreflective sheet in accordance with an embodiment of the present disclosure.

Fig. 1 depicts a cross-sectional of a retroreflective sheet 1 in accordance with an embodiment of the present disclosure.

The retroreflective sheet 1 of Fig. 1 comprises, in order, a top film layer 2, a binder layer 3, a spacer layer 5, and a metal-based reflective layer 6. As can be seen in Fig. 1, the top film layer 2 is the uppermost layer of the retroreflective sheet 1.

In the case of the embodiments in accordance with Fig. 1, the top film layer 2 comprises PVC, polyurethane, or some other highly transparent plastic material.

The binder layer 3 comprises a pigmented aromatic or aliphatic polyester urethane, PVC, polyurethane, or some other transparent plastic material. The pigments are provided in the form of titanium dioxide or some other solvable or non-solvable pigments or colorants.

The spacer layer 5 comprises PVB (poly vinyl butyral), urea resin with additives such as co-polyester as a softener/plasticizer.

The retroreflective sheet 1 in accordance with Fig. 1 comprises an adhesive layer 7. The adhesive layer 7 in the case of this embodiment comprises a polyacrylate. The metal-based reflective layer 6 is in the case of this embodiment provided as a metallization on a side of the adhesive layer 7 facing the spacer layer 5. The metallization is in the case of this embodiment aluminum-based.

The retroreflective sheet 1 in accordance with Fig. 1 comprises a liner 8. In the case of this embodiment, the liner 8 comprises siliconized films made of paper, polyethylene terephthalate or polypropylene.

The retroreflective sheet 1 in accordance with Fig. 1 comprises a plurality of microspheres 4 which are partially embedded in the spacer layer 5, penetrate the binder layer 3, and reach into the top film layer 2.

In the case of embodiments in accordance with Fig. 1, the plurality of microspheres 4 may either all be coated glass spheres, all uncoated glass spheres, or they may constitute a mix of uncoated glass spheres and coated glass spheres.

A penetration depth of the microspheres 4 into the top film layer 2 is in a range of from 10 to 50 % of a diameter of the microspheres 4. For other embodiments, different ranges are possible. The variation of the penetration depth may be smaller or larger, depending on the embodiment. For example, the variation may be smaller than 40 % of a diameter of the microspheres 4, optionally smaller than 30 % of a diameter of the microspheres 4, smaller than 20 % of a diameter of the microspheres 4, smaller than 10 % of a diameter of the microspheres 4, smaller than 5 % of a diameter of the microspheres 4, smaller than 3 % of a diameter of the microspheres 4, or smaller than 1.5 % of a diameter of the microspheres 4.

In the case of the embodiments in accordance with Fig. 1, the top film layer 2 comprises a crosslinker with a concentration in a range of from 5wt% to 12wt%. This concentration range of the binder may allow controlling the penetration depth depth of the microspheres 4 into the top film layer 2. However, for other embodiments, the crosslinker concentration may be in a different range, or the top film layer 2 may not comprise a binder, and a different way of controlling the penetration depth may be used.

The binder layer 3 is in the case of the embodiments in accordance with Fig. 1 provided with a white colorant, white pigments and/or a white dye.

The binder layer 3 is, in the case of this embodiment, additionally provided with an additional colorant (additional colored pigments other than white color pigments and/or at least one additional colored dye other than the white dye). However, in the case of other embodiments, there may be no additional colorant.

The top film layer 2 is, in the case of this embodiment, provided with a further colorant (further colored pigments or at least one further colored dye). In the case of other embodiments, colored pigments with a color other than white may be provide additionally or instead of the white pigments. Analogously, in the case of other embodiments, at least one colored dye with a color other than white may be provided additionally or instead of the white pigments. For other embodiments, there may be no further colorant.

The concentration of the white pigments is, in the case of embodiments in accordance with Fig. 1, in a range of from 0.1 wt% to 10 wt%.

It will be apparent to those skilled in the art that various modifications and variations can be made in the disclosed devices and systems without departing from the scope of the disclosure. Other aspects of the disclosure will be apparent to those skilled in the art from consideration of the specification and practice of the features disclosed herein. It is intended that the specification and examples be considered as exemplary only. Many additional variations and modifications are possible and are understood to fall within the framework of the disclosure.

## Claims

1. A retroreflective sheet comprising, in order,
a top film layer;
a binder layer;
a spacer layer; and
a metal-based reflective layer;
wherein the retroreflective sheet comprises a plurality of microspheres which are partially embedded in the spacer layer, penetrate the binder layer, and reach into the top film layer; and
the binder layer is provided with a white colorant, optionally, white pigments or a white dye.

2. The retroreflective sheet of claim 1, wherein the binder layer is additionally provided with an additional colorant, optionally, colored pigments and/or at least a colored dye.

3. The retroreflective sheet of claim 1 or 2, wherein the top film layer is provided with a further colorant, optionally, with further colored pigments or a further colored dye.

4. The retroreflective sheet of any one of the preceding claims, wherein the retroreflective sheet comprises an adhesive layer, the metal-based reflective layer optionally being provided as a metallization on a side of the adhesive layer facing the spacer layer.

5. The retroreflective sheet of any one of the preceding claims, wherein the retroreflective sheet comprises a liner.

6. The retroreflective sheet of any one of the preceding claims, wherein a penetration depth of microspheres of the plurality of the microspheres into the top film layer is in a range of from 10 to 50 % of a diameter of the microspheres, optionally in a range of from 20% to 50%, or from 25% to 47%.

7. The retroreflective sheet of any one of the preceding claims, wherein at least one of, optionally two or all of, the top film layer, binder layer, and spacer layer is a polymer-based layer or are polymer-based layers.

8. The retroreflective sheet of any one of the preceding claims, wherein the top film layer comprises at least one component of transparent plastic.

9. The retroreflective sheet of any one of the preceding claims, wherein the binder layer comprises at least one component of transparent plastic.

10. The retroreflective sheet of any one of the preceding claims, wherein the plurality of microspheres are glass spheres, optionally uncoated glass spheres or coated glass spheres.

11. The retroreflective sheet of any one of the preceding claims, wherein the spacer layer comprises at least one component selected from the group consisting of: polyvinyl butyral, urea resin, optionally comprising additives, such as a softener, a plasticizer, a flow additive, and/or a bonding agent, optionally a copolyester.

12. The retroreflective sheet of any one of the preceding claims, wherein the metal-based layer comprises aluminum.

13. The retroreflective sheet of claim 4, wherein the adhesive layer comprises a polyacrylate.

14. The retroreflective sheet of claim 5, wherein the liner comprises at least one component selected from the group consisting of: cover material comprising siliconized paper, PET, and PP.

15. The retroreflective sheet of any one of the preceding claims, wherein the binder layer comprises white pigments with a pigment content in a range of from 0.1 to 10 wt%.

16. The retroreflective sheet of any one of the preceding claims, wherein the binder layer is a binder lacquer layer and/or the spacer layer is a spacer lacquer layer.

17. The retroreflective sheet of any one of the preceding claims, wherein the microspheres of the plurality of microspheres are uncoated.

18. The retroreflective sheet of any one of the preceding claims, wherein at least some of, optionally all of, the plurality of microspheres are coated.

19. The retroreflective sheet of any one of the preceding claims, wherein the top film layer comprises a crosslinker with a concentration in a range of from 5wt% to 12wt%.

20. A method of manufacturing a retroreflective sheet of anyone of the preceding claims, comprising a step of heating a pre-cursor top film layer to a temperature of at least a glass transition temperature of the material of which the pre-cursor binder layer is made of, to reach a heated state of the pre-cursor top film layer, and
a step of embedding the microspheres in a pre-cursor spacer layer and a pre-cursor binder layer, and of letting the microspheres sink into the pre-cursor top film layer in the heated state.
